# EUROPEAN PATENT APPLICATION

(11) **EP 3 930 372 A1**
(43) Date of publication of application: **29.12.2021**
(21) Application number: 19916396.5
(22) Date of filing: 21.02.2019
(51) Int. Cl.: H04W 24/10, H04W 72/04, H04W 74/08

(54) **USER DEVICE**

(71) Applicant: NTT DOCOMO, INC., Chiyoda-Ku Tokyo 100-6150 (JP)
(72) Inventor: TAKAHASHI Hideaki, Tokyo 100-6150 (JP); TOEDA Teruaki, Tokyo 100-6150 (JP); TAKEDA Kazuki, Tokyo 100-6150 (JP)
(74) Representative: Hoffmann Eitle
(86) International application number: PCT/JP2019/006668
(87) International publication number: WO 2020/170404

(57) **Abstract**

A user equipment performs a random access procedure for recovery of a beam failure with a radio base station. The user equipment transmits to a network beam failure related information indicating a state of execution of the random access procedure.

## Description

### TECHNICAL FIELD

The present invention relates to a user equipment.

### BACKGROUND ART

3rd Generation Partnership Project (3GPP) specifies Long Term Evolution (LTE) , and with the aim of further speeding, specifies LTE-Advanced (hereinbelow, the LTE includes the LTE-Advanced). Moreover, in the 3GPP, further, specification of a succeeding system of the LTE called 5G New Radio (NR) or Next Generation (NG) and the like is being considered.

In the LTE, a user equipment (User Equipment UE), when detects a radio link failure (RLF), is capable of transmitting a notification which indicates having failure information at the time of occurrence of the RLF, to a network (Non-Patent Document 1).

Specifically, the network (specifically, eNB) , when receives the notification from the UE, transmits a UE Information Request which is a message of a radio resource control layer, to the UE. The UE which has received the UE Information Request, returns a UE Information Response including a cell for which the failure was detected (failedPCellID), a cause of the RLF (rlf-cause), and the like, to the network.

The network uses the information at the time of occurrence of the RLF transmitted from the UE, and is capable of realizing a self-optimization function of the network (SON: Self Organizing Networks).

Moreover, in the NR, it has been stipulated that, the UE, in a case of having detected a beam failure in Channel State Information Reference Signal (CSI-RS) or SS/PBCH Block (SSB) in serving, makes an attempt for recovery of the beam failure (beam failure recovery), in the random access procedure (Non-Patent Document 2).

### PRIOR ART DOCUMENT

### NON-PATENT DOCUMENT

Non-Patent Document 1: 3GPP TS 36.331 V15.4.0, 3rd Generation Partnership Project; Technical Specification Group Radio Access Network; Evolved Universal Terrestrial Radio Access (E-UTRA) ; Radio Resource Control (RRC) ; Protocol specification (Release 15), 3GPP, December 2018
Non-Patent Document 2: 3GPP TS 38.321 V15.4.0, 3rd Generation Partnership Project; Technical Specification Group Radio Access Network; NR; Medium Access Control (MAC) protocol specification (Release 15), 3GPP, December, 2018

### SUMMARY OF THE INVENTION

As mentioned above, in the NR, although an attempt is made for the recovery of the beam failure in the random access procedure, the UE is not capable of notifying information related to the beam failure to the network. Consequently, the network has a difficulty in realizing a highly accurate self-optimization function for a beam, that is, a predetermined synchronization signal block (SSB) and reference signal (CSI-RS) .

Therefore, the present invention has been made in view of the above discussion, and one object of the present invention is to provide a user equipment that is capable of contributing to automated optimization of the network for the predetermined synchronization signal block and the reference signal.

According to one aspect of the present invention a user equipment (UE 200) includes a control unit (control unit 230) that performs a random access procedure for recovery of a beam failure with a radio base station (e. g., "gNB 100"); and a transmitting unit (transmitting unit 210) that transmits to a network (NG-RAN 20) beam failure related information (BeamFailureReport) indicating a state of execution of the random access procedure.

### BRIEF DESCRIPTION OF DRAWINGS

FIG. 1 is an overall schematic configuration diagram of a radio communication system 10.
FIG. 2 is a functional block diagram of UE 200.
FIG. 3A is a diagram showing a sequence of a contention-based (competition-based) RA procedure.
FIG. 3B is a diagram showing a sequence of a contention-free (polling-based) RA procedure.
FIG. 4 is a diagram showing a stipulated example of an operation content at the time of detection of a beam failure by the UE 200.
FIG. 5 is a diagram showing a stipulated example of VarBeamFailureReport including beam failure related information.
FIG. 6 is a sequence diagram showing a notification example 1 of a notification about having the beam failure related information, to a network.
FIG. 7 is a diagram showing a configuration example of RRC Reconfiguration Complete.
FIG. 8 is a sequence diagram showing a notification example 2 of a notification about having the beam failure related information, to the network.
FIG. 9 is a diagram showing a configuration example of RRC Resume Complete.
FIG. 10 is a sequence diagram showing a notification example 3 of a notification about having the beam failure related information, to the network.
FIG. 11 is a diagram showing a configuration example of RRC Setup Complete.
FIG. 12 is a transmission sequence diagram of the beam failure related information.
FIG. 13 is a diagram showing a stipulated example of an operation content of the UE 200 that has received a UE Information Request.
FIG. 14 is a diagram showing a configuration example of the UE Information Request.
FIG. 15A is a diagram (part 1) showing a configuration example of a UE Information Response.
FIG. 15B is a diagram (part 2) showing a configuration example of the UE Information Response.
FIG. 15C is a diagram (part 3) showing a configuration example of the UE Information Response.
FIG. 16A is an explanatory diagram of a field constituting the UE Information Response.
FIG. 16B is an explanatory diagram of a field constituting BeamFailureReport.
FIG. 16C is an explanatory diagram of a field constituting RACH-Report.
FIG. 17 is a diagram showing an example of a hardware configuration of the UE 200.

### MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

### (1) Overall Schematic Configuration of Radio Communication System

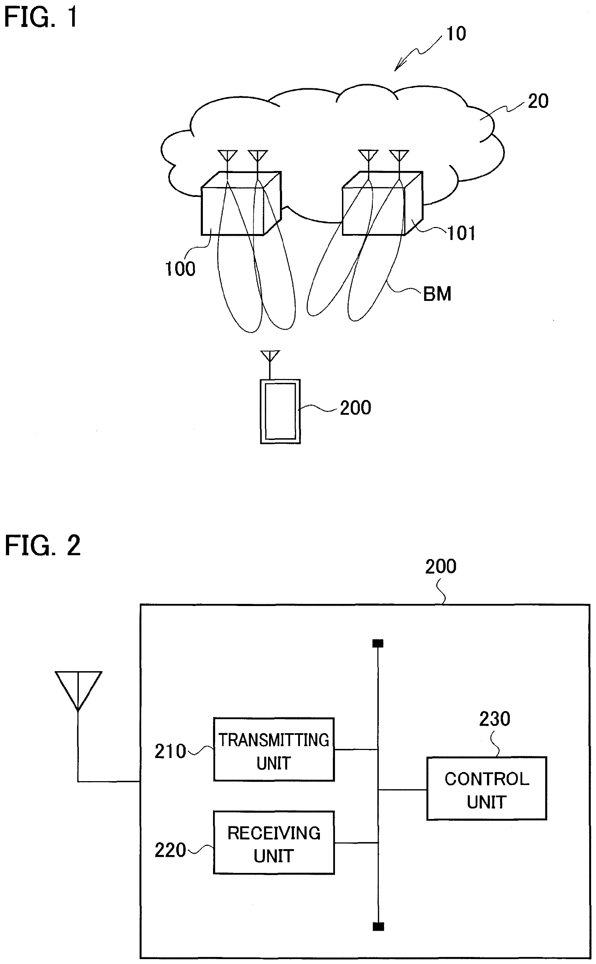

FIG. 1 is an overall schematic configuration diagram of a radio communication system 10 according to the present embodiment. The radio communication system 10 is a radio communication system according to 5G New Radio (NR). The radio communication system 10 includes Next Generation-Radio Access Network 20 (hereinafter, "NG-RAN 20") and a user equipment 200 (hereinafter, "UE 200").

The NG-RAN 20 includes a radio base station 100 (hereinafter, "gNB 100") and a radio base station 110 (hereinafter, "gNB 101"). A concrete configuration of the radio communication system 10, including the number of the gNBs and the UEs, is not limited to the example shown in FIG. 1.

The NG-RAN 20 actually includes a plurality of NG-RAN Nodes, in particular, the gNBs (or ng-eNB). Also, the NG-RAN 20 is connected to a core network (5GC, not shown) according to the 5G. The NG-RAN 20 and the 5GC may be simply expressed as "network".

The gNB 100 and the gNB 101 is a radio base station according to the 5G. The gNB 100 (gNB 101) performs a radio communication with the UE 200 according to the 5G. The gNB 100 (gNB 101) and the UE 200 can handle, by controlling a radio signal transmitted from a plurality of antenna elements, Massive MIMO that generates a beam BM with a higher directivity, carrier aggregation (CA) that uses a plurality of component carriers (CC), dual connectivity (DC) in which a component carrier is transmitted simultaneously between a plurality of NG-RAN Nodes and the UE, and the like.

Moreover, the gNB 100 (gNB 101) and the UE 200 perform a random access procedure (RA Procedure) and start radio communication. Specifically, the UE 200 in an idle state transmits a random access preamble (RA Preamble) via a random access channel (RACH), and starts with the gNB 100 the RA procedure.

Moreover, the UE 200 performs monitoring of a radio link with the gNB 100 (gNB 101). Specifically, the UE 200 monitors a synchronization signal block in serving, specifically, an SS/PBCH Block (SSB), or a reference signal, specifically, a Channel State Information Reference Signal (CSI-RS) (radio link monitoring) . The UE 200 detects a radio link failure (beam failure) on the basis of a monitoring result of the SSB or the CSI-RS.

The UE 200, in a case of having detected the beam failure, makes an attempt for recovery of the beam failure (beam failure recovery) in the RA procedure. Regarding the beam failure recovery, it has been stipulated in version 5.17 and the like of 3GPP TS38.321.

### (2) Functional Block Configuration of Radio Communication System

Next, a functional block configuration of the radio communication system 10 will be explained below. Specifically, a functional block configuration of the UE 200 will be described here.

FIG. 2 is a functional block diagram of the UE 200. As shown in FIG. 2, the UE 200 includes a transmitting unit 210, a receiving unit 220, and a control unit 230.

The transmitting unit 210 transmits an uplink signal (UL signal) according to the NR. And the receiving unit 220 receives a downlink signal (DL signal) according to the NR.

The control unit 230 performs a control related to a UL signal transmitted by the transmitting unit 210 and a DL signal received by the receiving unit 220. In the present embodiment, the control unit 230 performs an RA procedure for the recovery of beam failure mentioned above (beam failure recovery) with the gNB 100 (or gNB 101, the same applies hereinafter)

The transmitting unit 210 transmits beam failure related information indicating a state of the beam failure to the network. Specifically, the transmitting unit 210 transmits beam failure related information to the NG-RAN 20 (or 5GC) .

Specifically, the beam failure related information indicates a performing status of the RA procedure for the recovery of the beam failure (beam failure recovery). More specifically, the transmitting unit 210 transmits a UE Information response which is a message of a radio resource control layer (RRC). The beam failure related information is included in the UE Information Response.

In the present embodiment, the receiving unit 220 receives a transmission request for transmitting the beam failure related information from the network. Specifically, the receiving unit 220 receives a UE Information Request which is a message of the RRC, from the NG-RAN 20 (or 5GC).

The transmitting unit 210 transmits the UE Information Response in response to the UE Information Request received.

In the present embodiment, the transmitting unit 210 is capable of including the following information as the UE Information Response (beam failure related information).

- the number of times for which the RA Preamble is transmitted till the RA procedure for the beam failure recovery ends
- information indicating whether or not the RA Preamble was transmitted with a predetermined maximum transmission power in the RA procedure
- information indicating whether or not there was a fallback from a contention-based RA procedure to a contention-free RA procedure
- reception quality of the SSB or the CSI-RS that performed the radio link monitoring

The transmitting unit 210 is capable of transmitting the beam failure information including at least one of the abovementioned information.

Regarding 'the number of times of the RA Preamble', after the transmitting unit 210 has transmitted the RA Preamble a number of times, the beam (SSB / CSI-RS) is switched, and a case in which the RA Preamble is newly transmitted a number of times toward another beam may arise. Therefore, in addition to the total number of times for which the RA Preamble is transmitted, the following information may be included.

- the number of times for which the RA Preamble is transmitted for each beam (SSB / CSI-RS associated with the RA Preamble)
- the number of times for which the RA Preamble is transmitted for the latest SSB / CSI-RS associated with the RA Preamble

Moreover, the transmitting unit 210, by performing power ramping for a plurality of times for making the transmission of the RA Preamble successful on the basis of the instruction from the control unit 230, is capable of transmitting information indicating reaching the predetermined maximum transmission power when the predetermined maximum transmission power that has been stipulated in advance is reached. The information is called maxTxPowerReached.

The reception quality of the SSB or the CSI-RS, specifically, is a Reference Signal Received Power (RSRP), and a Reference Signal Received Quality (RSRQ) or a Signal-to-Interference plus Noise power Ratio (SINR).

### (3) Operation of Radio Communication System

Next, an operation of the radio communication system 10 will be explained below. Specifically, an operation of performing the RA procedure, an operation of detecting a beam failure, an operation of notifying to a network about having failure information, and an operation of transmitting the failure information will be described below.

### (3.1) RA Procedure

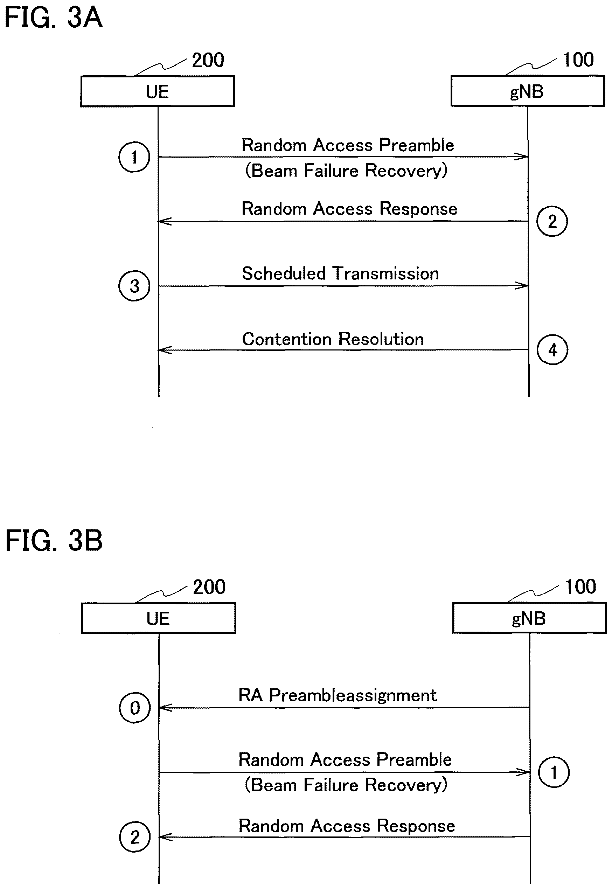

FIG. 3A and FIG. 3B show a sequence of an RA procedure. Specifically, FIG. 3A shows a sequence of a contention-based (competitive-based) RA procedure. FIG. 3B shows a sequence of a contention-free (polled-based) RA procedure.

As shown in FIG. 3A, the UE 200 transmits an RA Preamble to the gNB 100 via the RACH (1 in the diagram, the same applies hereinafter). Specifically, the UE 200 selects any SSB for which the RSRP is larger than a threshold value notified from a network (NG-RAN 20), and selects one RA Preamble randomly from among the plurality of RA Preambles tied to the SSB selected.

Note that, the UE 200, in a case in which, there is no SSB having the RSRP larger than the threshold value, selects an arbitrary SSB.

Moreover, in a case of performing the RA procedure for recovery of the beam failure (beam failure recovery), it is possible to set a threshold value and an RA Preamble for the beam failure recovery.

The gNB 100, in accordance with the RA Preamble received, allocates a resource of UL and C-RNTI (Radio Network Temporary Identifier), and transmits an RA Response including the allocation to the UE 200 via a Downlink Shared Channel (DL-SCH) (2 in the diagram).

The UE 200, on the basis of the RA Response received, transmits a Radio Resource Control (RRC) setting request message as msg 3 to the gNB 100 (3 in the diagram) . Moreover, for authenticating the UE 200, an ID of Non-Access Stratum (NAS) layer is to be included.

The gNB 100, on the basis of the RRC setting request message (msg 3) received, transmits an RRC setting message including cell setting information and the like for establishing an RRC connection as msg 4 to the UE 200 (4 in the diagram).

Note that, in a case of contention-based RA procedure, as the UE 200 makes an attempt for transmission in the RACH without a permission in particular, when there is no response from the gNB 100, the UE 200 increases transmission power of the RACH, that is, the RA Preamble (power ramping), and makes an attempt for retransmission in the RACH.

Moreover, as shown in FIG. 3B, in a case of the contention-free RA procedure, the gNB 100 notifies the RA Preamble to be used for the RA procedure to the UE 200 (0 in the diagram). Specifically, the gNB 100 transmits an RA Preamble Assignment to the UE 200.

The UE 200, on the basis of the RA Preamble notified, transmits the RA Preamble to the gNB 100 via the RACH (1 in the diagram) . The gNB 100, in response to the RA Preamble received, transmits an RA Response to the UE 200 (2 in the diagram).

In a case of recovery of beam failure (beam failure recovery), first, the contention-free RA procedure is performed.

### (3.2) Detection of Beam Failure

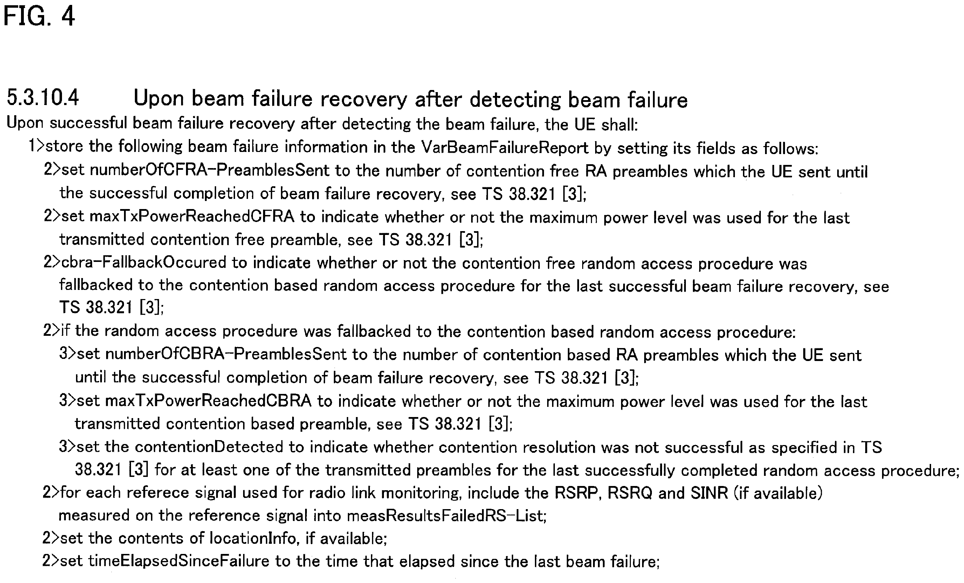

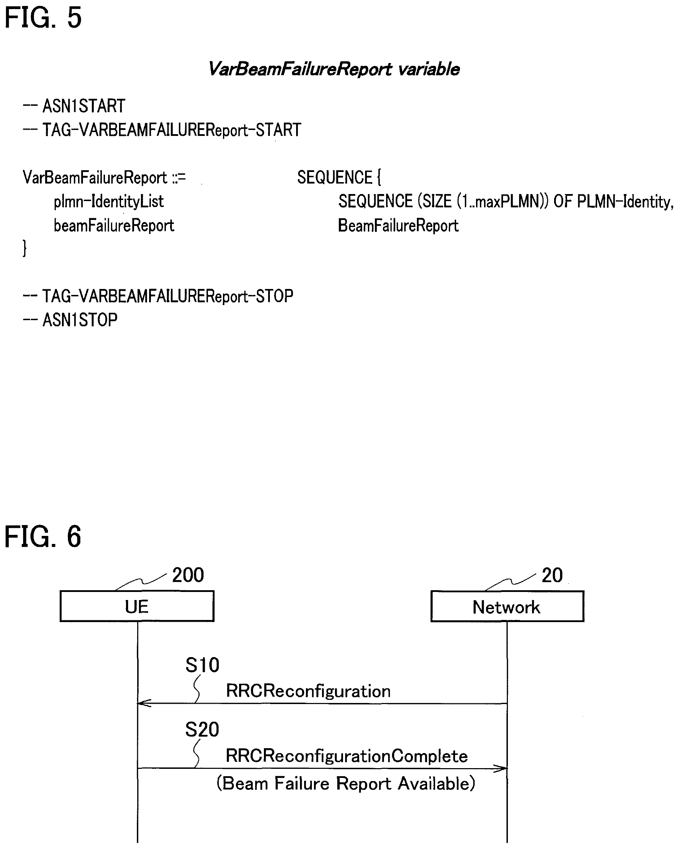

FIG. 4 indicates a stipulated example of an operation content at the time of detection of a beam failure by the UE 200. Specifically, FIG. 4 shows a stipulated example of the operation content that can be added to version 5.3.10 of 3GPP TS38.331 (Radio link failure related actions). FIG. 5 shows a stipulated example of VarBeamFailureReport including beam failure related information.

As shown in FIG. 4, the UE 200 holds the beam failure related information acquired as VarBeamFailureReport (refer to FIG. 5). Specifically, in VarbeamFailureReport, it is possible to include the number of times for which the RA Preamble is transmitted till the end of the RA procedure for beam failure recovery (numberOfCFRA-PreamblesSent in the diagram), information indicating whether or not the RA Preamble was transmitted with the predetermined maximum transmission power in the RA procedure (maxTxPowerReachedCFRA in the diagram), information indicating whether or not there was a fallback from the contention-based RA procedure to the contention-free RA procedure (cbra-FallbackOccured in the diagram), and the reception quality of the SSB or the CSI-RS which performed the radio link monitoring (measResultsFailedRS-List in the diagram).

### (3.3) Notification of Having Beam Failure Related Information, to Network

Next, notification examples of a notification to the network, that the UE has beam failure related information, will be explained below. As shown in notification examples 1 to 3, the UE 200, at a plurality of occasions, is capable of notifying to the network that the UE has beam failure related information.

### (3.3.1) Notification Example 1

FIG. 6 is a sequence diagram showing the notification example 1 of a notification to the network about having beam failure related information.

As shown in FIG. 6, the network (NG-RAN 20) transmits an RRC Reconfiguration requesting a modification in content of settings in the RRC, to the UE 200 (Step S10).

The UE 200 modifies the content of settings in the RRC, and returns an RCC Reconfiguration Complete to the network (Step S20). It is possible to include Beam Failure Report Available which is a field indicating having the beam failure related information in the RRC Reconfiguration Complete.

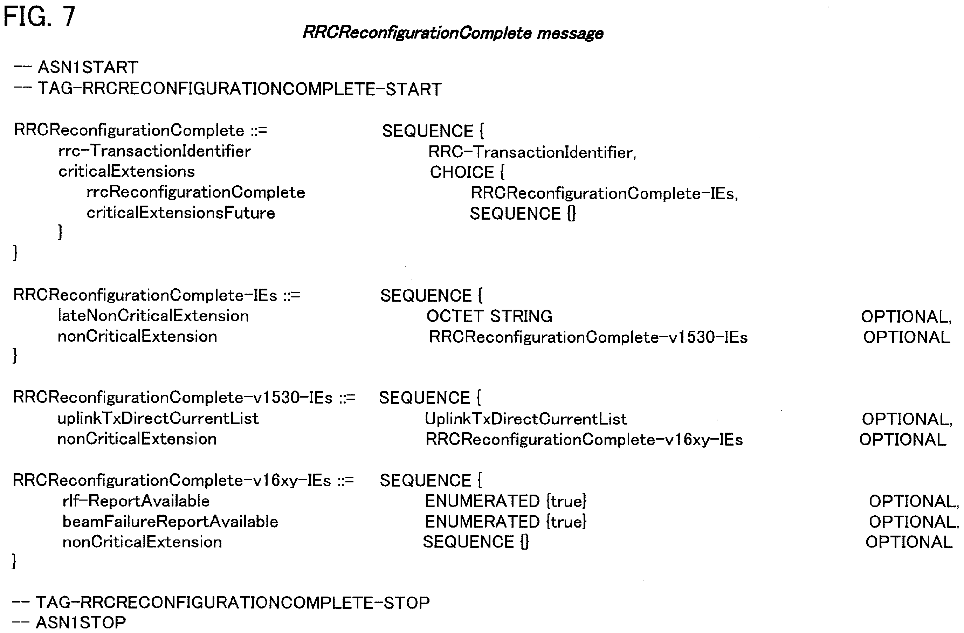

FIG. 7 is a diagram showing a configuration example of the RRC Reconfiguration Complete. As shown in FIG. 7, it is possible to include the Beam Failure Report Available (refer to an underlined portion) in the RRC Reconfiguration Complete.

### (3.3.2) Notification Example 2

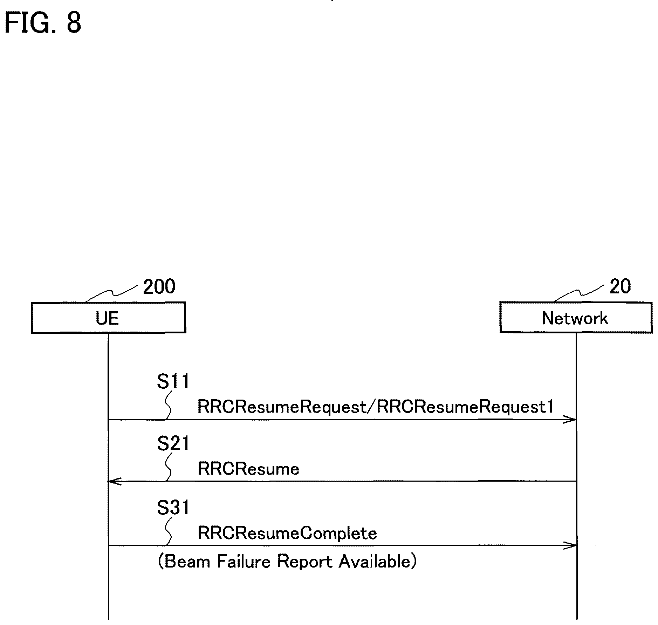

FIG. 8 is a sequence diagram showing the notification example 2 of a notification to the network about having beam failure related information.

As shown in FIG. 8, the UE 200 transmits an RRC Resume Request or an RRC Resume Request 1 requesting a restart of the RRC connection that was relayed, to the network (NG-RAN 20) (Step S11).

The network, in response to the RRC Resume Request or the RRC Resume Request 1 received, transmits an RRC Resume instructing the restart of the RRC connection, to the UE 200 (Step S21).

The UE 200 restarts the RRC connection, and returns the RRC Resume Complete to the network (Step S31). It is possible to include the Beam Failure Report Available in the RRC Resume Complete.

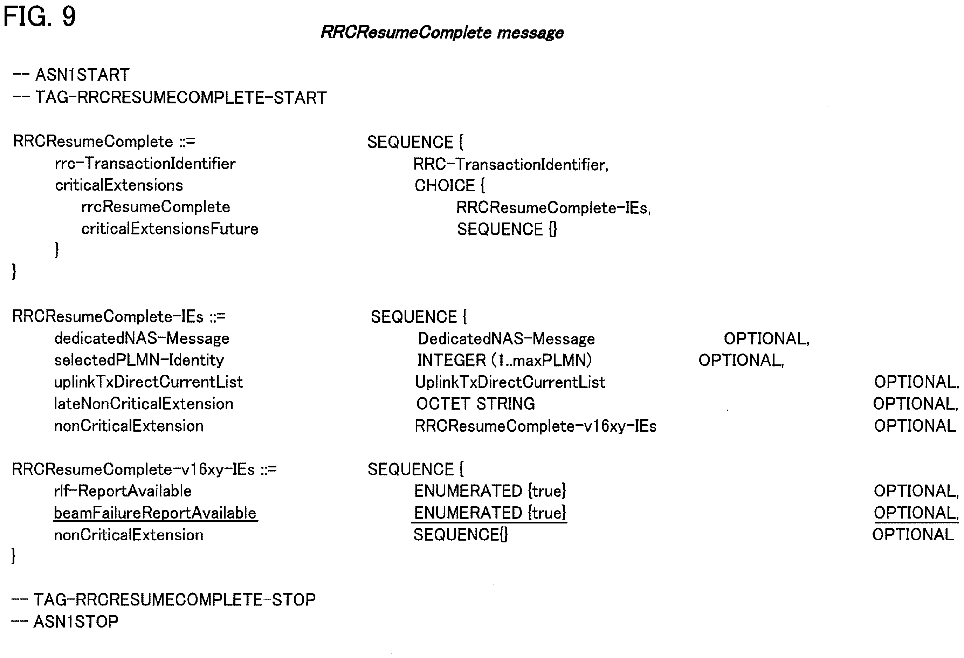

FIG. 9 is a diagram showing a configuration example the RRC Resume Complete. As shown in FIG. 9, it is possible to include the Beam Failure Report Available (refer to an underlined portion) in the RRC Resume Complete.

### (3.3.3) Notification Example 3

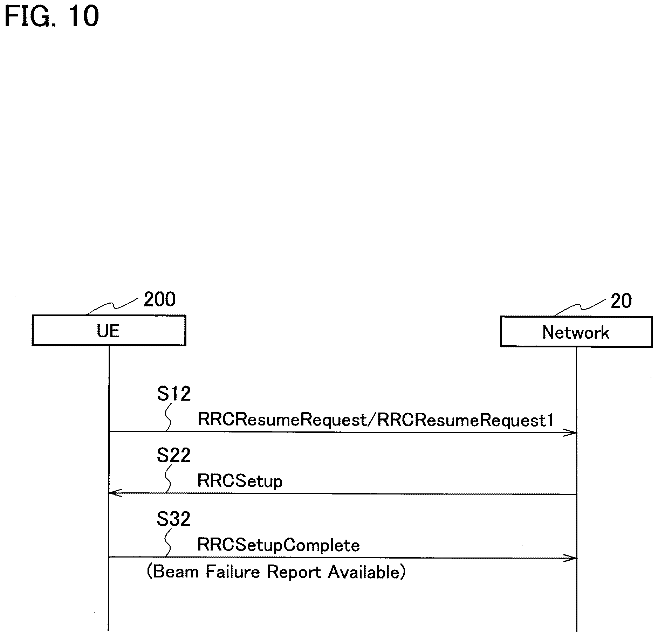

FIG. 10 is a sequence diagram showing the notification example 3 of a notification to the network about having beam failure related information.

As shown in FIG. 10, the UE 200 transmits an RRC Resume Request or an RRC Resume Request 1 requesting a restart of the RRC connection that was relayed, to the network (NG-RAN 20) (Step S12).

The network, in response to the RRC Resume Request or the RRC Resume Request 1 received, transmits an RRC Setup instructing setting of a new RRC connection, to the UE 200 (Step S22).

The UE 200 sets the new RRC connection, and returns an RRC Setup Complete to the network (Step S32). It is possible to include the Beam Failure Report Available in the RRC Setup Complete.

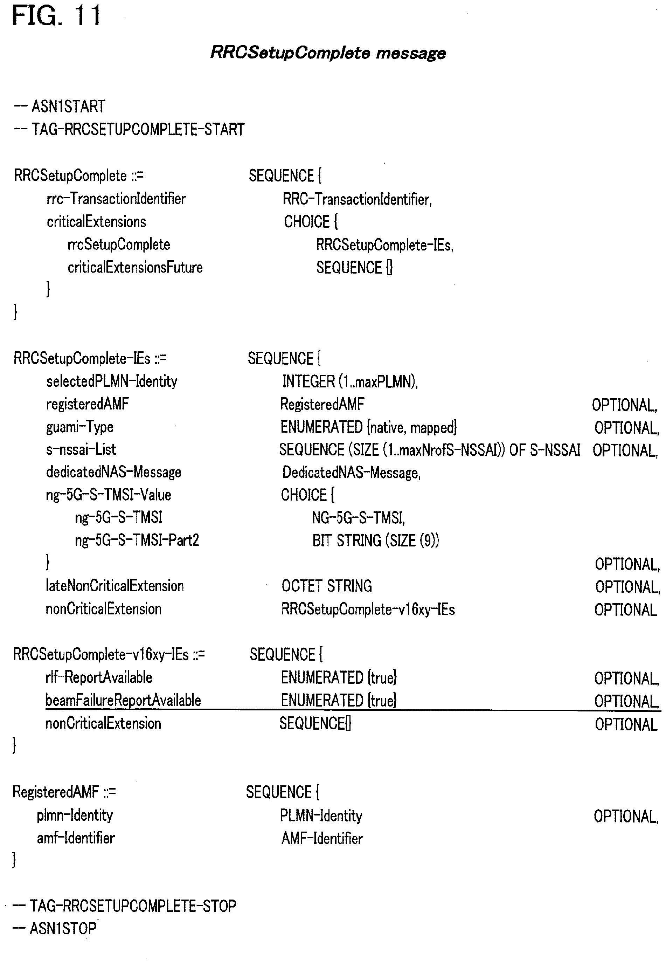

FIG. 11 is a diagram showing a configuration example of the RRC Setup Complete. As shown in FIG. 11, it is possible to include the Beam Failure Report Available (refer to an underlined portion) in the RRC Setup Complete.

### (3.4) Transmission of Beam Failure Related Information

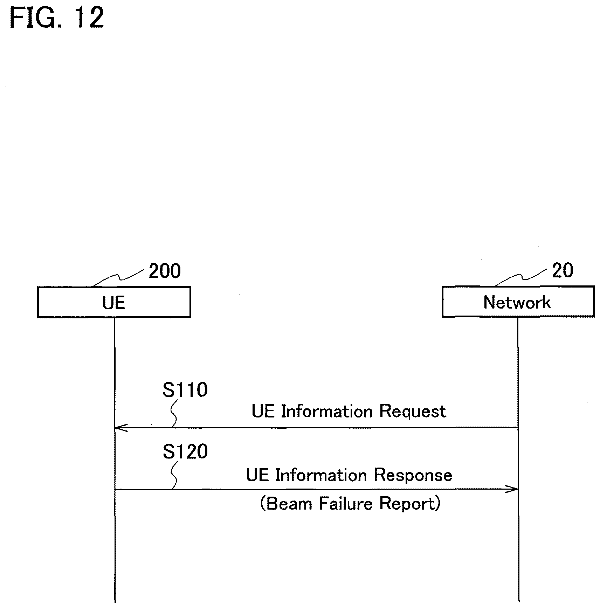

FIG. 12 is a transmission sequence diagram of the beam failure related information. The network (NG-RAN 20) which has acknowledged that the UE 200 has the failure information by one of the abovementioned notification examples 1 to 3 of the notification to the network about having the failure information, as shown in FIG. 12, transmits a UE Information Request which is a request for transmitting the failure information, to the UE 200 (Step S110).

As mentioned above, the UE Information Request is a message of the RRC. The UE Information Request is transmitted via a Dedicated Control Channel (DCCH) of a downlink (DL).

The UE 200, in response to the UE Information Request received, returns the UE Information Response to the network (S120).

As mentioned above, the UE Information Response as well, is a message of the RRC. The UE Information Response is transmitted via a DCCH of an uplink (UL).

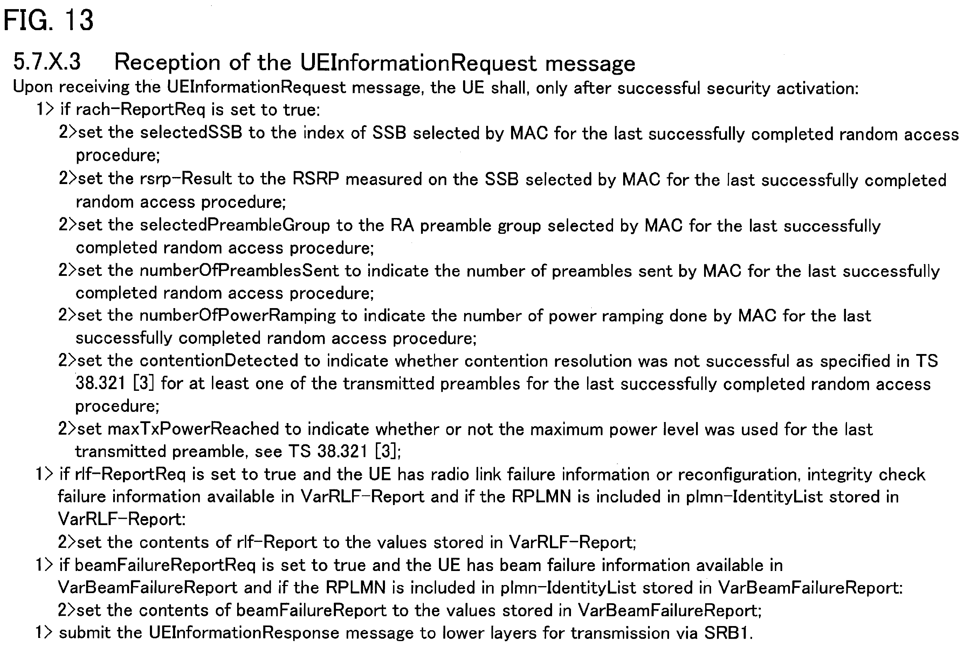

FIG. 13 shows a stipulated example of an operation content of the UE 200 that has received the UE Information Request. Specifically, FIG. 13 shows a stipulated example of the operation content that can be added to version 5.7 of 3GPP TS38.331.

As shown in FIG. 13, the UE 200, upon receiving the UE Information Request, determines whether or not a transmission request related to the RA procedure (rach-ReportReq in the diagram) has been set.

Specifically, the UE 200, in a case in which the rach-ReportReq has been set to true, sets the following information.

- index of the SSB selected in the RA procedure that succeeded the previous time (selectedSSB in the diagram)
- RSRP in the SSB selected (rsrp-Result in the diagram)
- group of the RA Preambles selected (groups A, B) (selectedPreambleGroup in the diagram)
- the number of RA Preambles transmitted in the RA procedure (numberOfPreamblesSent in the diagram)
- the number of times for which the power ramping was performed in the RA procedure (numberOfPowerRamping in the diagram)
- presence or absence of contention in the RA procedure (contentionDetected in the diagram)
- whether or not reached the predetermined maximum transmission power stipulated in advance, in the RA procedure (maxTxPowerReached in the diagram)

Note that, as mentioned above, all the information is not necessarily required to be included, and at least one information may have been included.

Moreover, regarding the rsrp-Result, only whether or not the RSRP of the SSB selected exceeds the threshold value (rsrp-ThresholdSSB) may be reported.

Moreover, regarding the rsrp-Result, only whether or not the RSRP of the SSB selected exceeds the threshold value (rsrp-ThresholdSSB) may be reported.

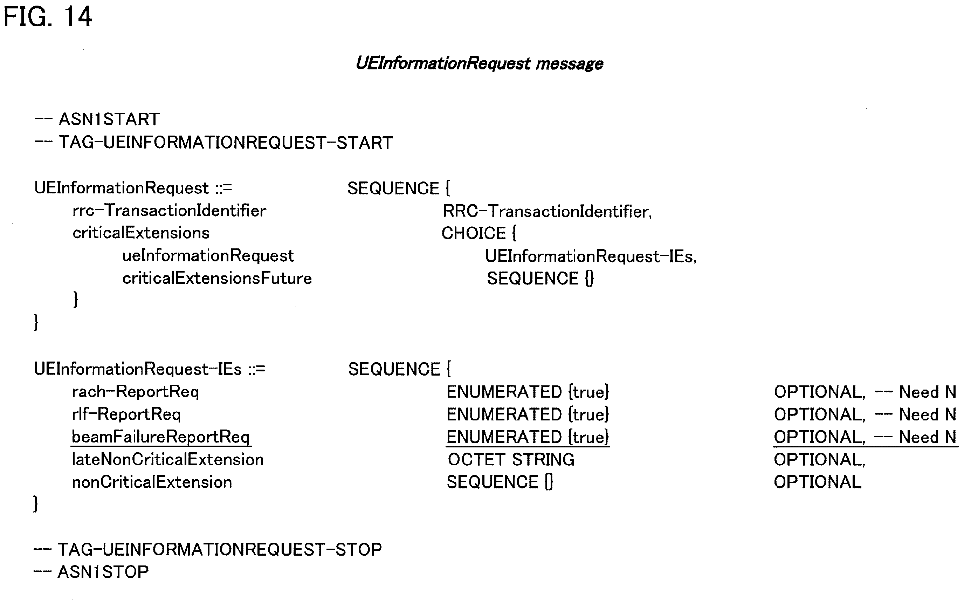

FIG. 14 is a diagram showing a configuration example of the UE Information Request.

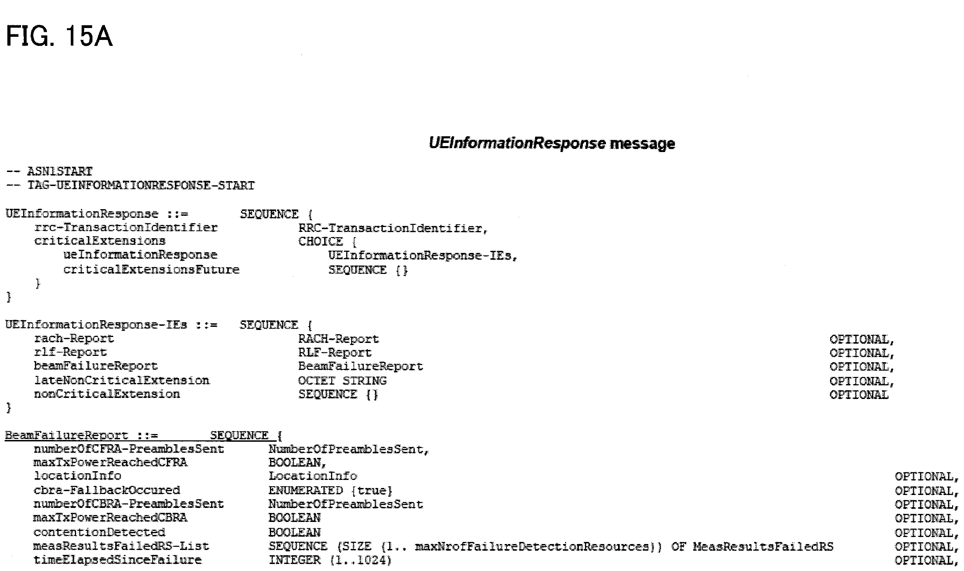

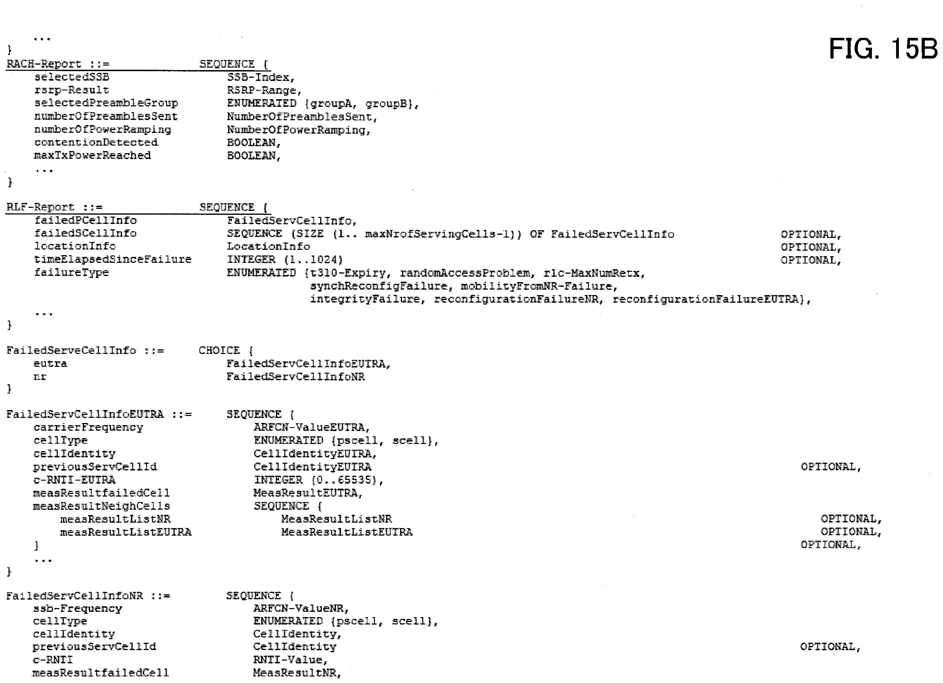

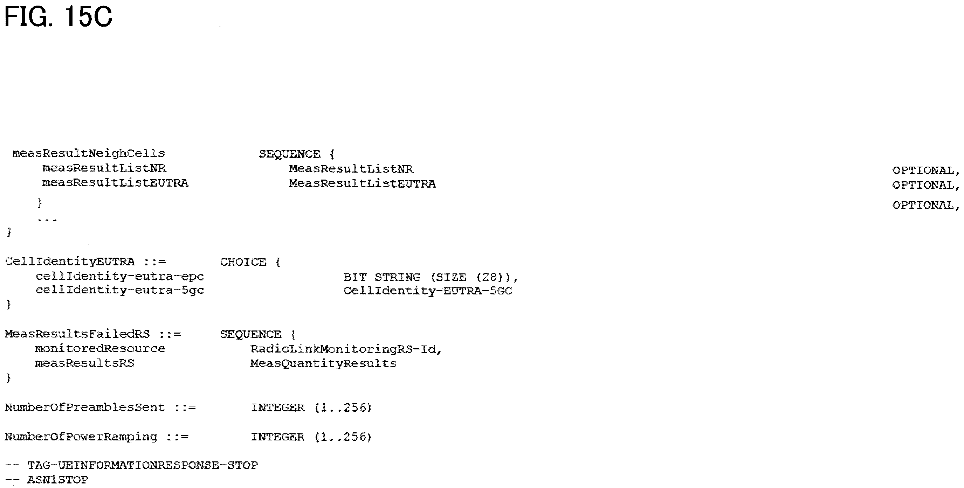

FIGS. 15A to 15C are diagrams showing configuration examples of the UE Information Response. Specifically, FIG. 15B has a content in continuation with a configuration content shown in FIG. 15A, and FIG. 15C has a content in continuation with a configuration content shown in FIG. 15B.

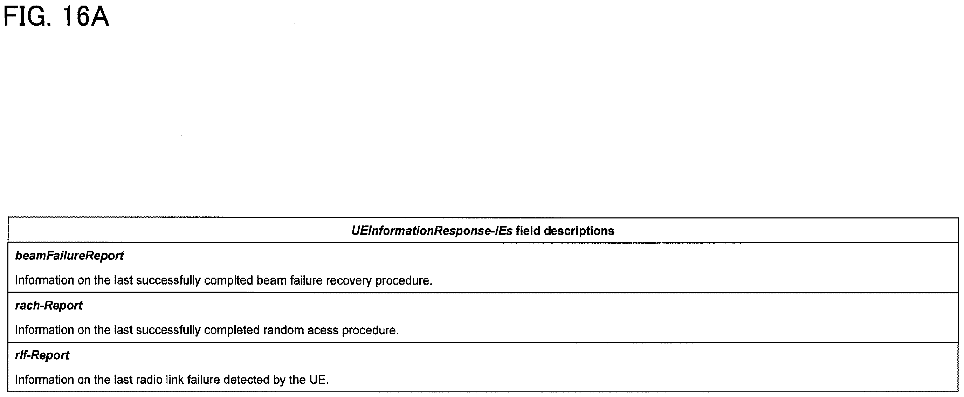

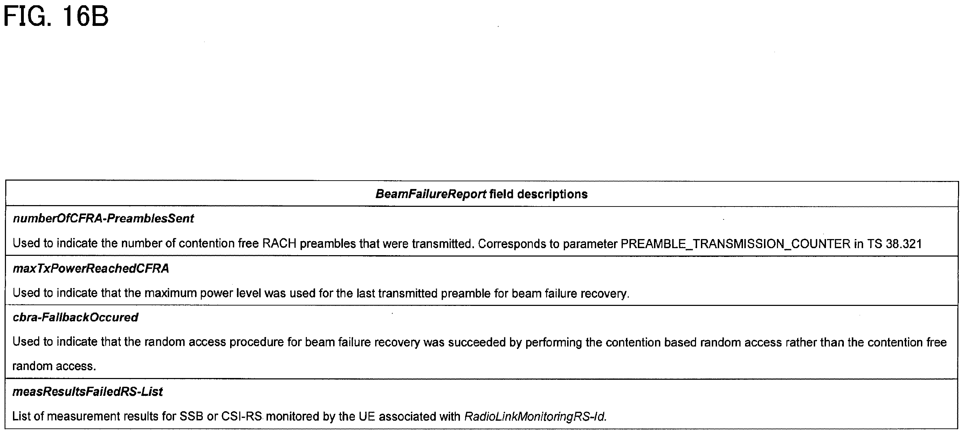

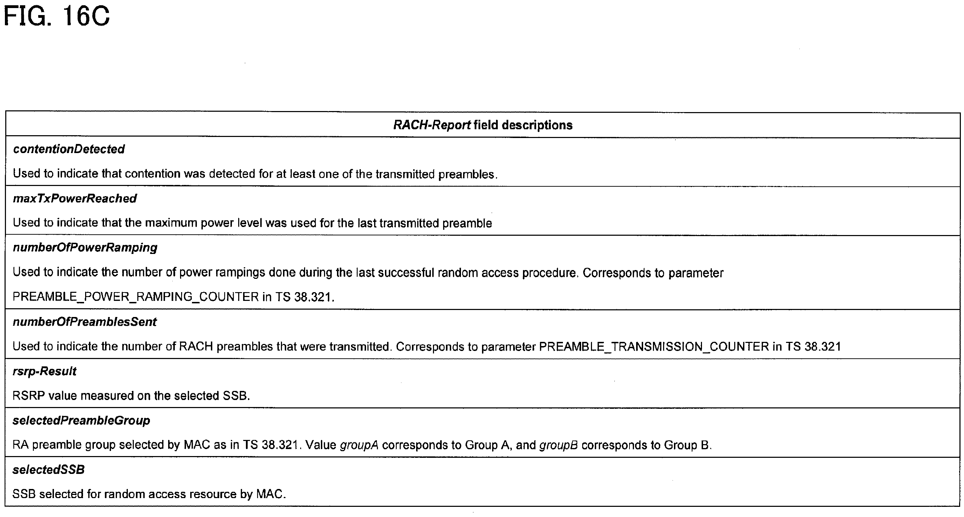

FIG. 16A is an explanatory diagram of a field constituting the UE Information Response. Moreover, FIG. 16B and FIG. 16C are explanatory diagrams of fields constituting a BeamFailureReport and an RACH report.

As shown in FIG. 14, beamFailureReportReq (refer to an underlined portion) requesting transmission of the beam failure related information is included in the UE Information Request.

As shown in FIGS. 15A to 15C and FIGS. 16A to 16D, the BeamFailureReport (refer to an underlined portion) including the beam failure related information and the RACH-Report (refer to an underlined portion) including the information at the time of performing the RA procedure is included in the UE Information Response.

In the BeamFailureReport, content of the beam failure related information held as the content of VarBeamFailureReport (refer to FIG. 4) by the UE 200 is reflected.

Moreover, in the RACH-Report, the abovementioned selectedSSB, rsrp-Result, selectedPreambleGroup, numberOfPreambleSent, numberOfPowerRamping, contetionDetected, and maxTxPowerReached are included.

### (4) Advantageous Effects

According to the abovementioned embodiment, the following advantageous effects are achieved. Specifically, the UE 200 transmits the beam failure related information (BeamFailureReport) indicating the status of performing the RA procedure for recovery of the beam failure (beam failure recovery), to the network (NG-RN 20).

Consequently, by using the beam failure related information transmitted from the UE 200, it is possible to facilitate automated optimization of beam-related parameters, that is, parameters related to the SSB and the CSI-RS, with higher accuracy. That is, the UE 200 is capable of contributing to the automated optimization of the beam-related parameters with higher accuracy.

Specifically, the network is capable of statistically analyzing the parameters reported from the UE 200, and optimizing the beam-related parameters in the NR.

In the present embodiment, as shown in FIG. 4, the UE 200 is capable of transmitting the beam failure related information (BeamFailureReport) including at least one of the number of times for which the RA Preamble is transmitted till the end of the RA procedure for beam failure recovery (numberOfCFRA-PreambleSent), the information indicating whether or not the RA Preamble was transmitted with the predetermined maximum transmission power in the RA procedure (maxTxPowerReachedCFRA), the information indicating whether or not there was a fallback from the contention-based RA procedure to the contention-free RA procedure (cbra-FallbackOccured), and the reception quality of the SSB or the CSI-RS which performed the radio link monitoring (measResultsFailedRS-List) .

Consequently, the network, by using the information, is capable of facilitating automated optimization of the beam-related parameters with higher accuracy.

In the present embodiment, the UE 200, in response to the UE Information Request (transmission request) transmitted from the network, transmits the UE Information Response including the beam failure related information.

Consequently, the network is capable of making the UE 200 transmit the beam failure related information held by the UE 200 at a desired timing. Accordingly, the network is capable of acquiring the beam failure related information timely while suppressing consumption of the radio resource.

### (5) Other Embodiments

Although the contents of the present invention have been described by way of the embodiments, it is obvious to those skilled in the art that the present invention is not limited to what is written here and that various modifications and improvements thereof are possible.

For example, in the abovementioned embodiments, an appellation BeamFailureReport is used. However, other appellations may be used. Moreover, wordings such as 'beam failure' in particular may not be used provided that it is information indicating the status of performing the RA procedure for recovery of beam failure.

Similarly, other appellations may be used for UE Information Request and UE Information Response.

Moreover, the block diagram used for explaining the embodiments (FIG. 2) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

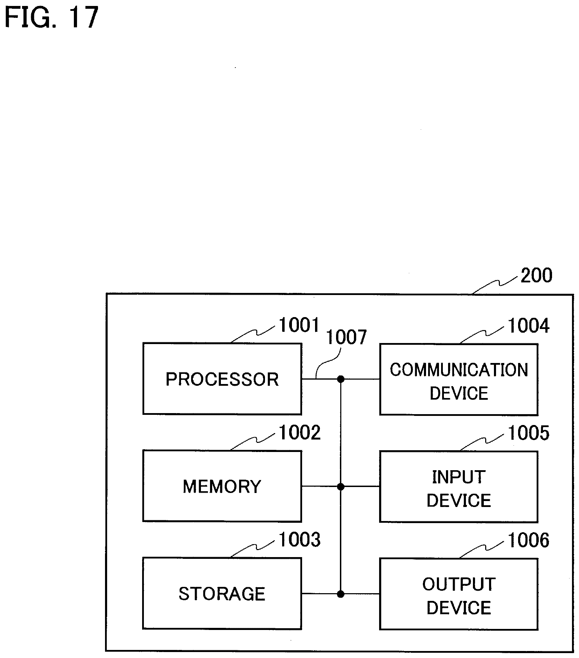

Furthermore, the UE 200 explained above can function as a computer that performs the processing of the radio communication method of the present disclosure. FIG. 17 is a diagram showing an example of a hardware configuration of the UE 200. As shown in FIG. 17, the UE 200 can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the UE 200 (see FIG. 2) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the UE 200 by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission / reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware . For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling) . Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding • other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like) , a moving body that moves unmanned (for example, a drone, an automatically driven vehicle, or the like) , a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like) . In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### EXPLANATION OF REFERENCE NUMERALS

- 10: Radio communication system
- 20: NG-RAN
- 100: gNB
- 101: gNB
- 200: UE
- 210: Transmitting unit
- 220: Receiving unit
- 230: Control unit
- 1001: Processor
- 1002: Memory
- 1003: Storage
- 1004: Communication device
- 1005: Input device
- 1006: Output device
- 1007: Bus
- BM: Beam

## Claims

1. A user equipment comprising:
a control unit that performs a random access procedure for recovery of a beam failure with a radio base station; and
a transmitting unit that transmits to a network beam failure related information indicating a state of execution of the random access procedure.

2. The user equipment as claimed in claim 1, wherein the transmitting unit transmits the beam failure related information including at least one of
number of times for which a random access preamble is transmitted till the random access procedure ends,
information indicating whether the random access preamble was transmitted with a predetermined maximum transmission power in the random access procedure,
information indicating whether there was a fallback from a contention-based random access procedure to a contention-free random access procedure, and
a reception quality of one of a predetermined reference signal and a predetermined synchronization signal block that has performed radio link monitoring.

3. The user equipment as claimed in claim 1, comprising:
a receiving unit that receives from the network a transmission request for transmitting the beam failure related information, wherein
the transmitting unit transmits the beam failure related information in response to the transmission request.
